# EUROPEAN PATENT APPLICATION

(11) **EP 2 355 017 A1**
(43) Date of publication of application: **10.08.2011**
(21) Application number: 10152608.5
(22) Date of filing: 04.02.2010
(51) Int. Cl.: G06Q 10/00

(54) **Method for advanced email thread management**

(71) Applicant: RESEARCH IN MOTION LIMITED, Waterloo, Ontario N2L 3W8 (CA)
(72) Inventor: Tu, Van Quy, Waterloo Ontario N2L 5Z5 (CA); Scriver, Aaron David, Waterloo Ontario N2L 5Z5 (CA)
(74) Representative: MERH-IP Matias Erny Reichl Hoffmann

(57) **Abstract**

A method and device for managing e-mails to prevent thread splitting, comprising receiving and displaying a first e-mail thread, generating a notification of receipt of any further e-mail thread prior to sending a response to the first e-mail thread, generating a first prompt for saving the response to the first e-mail thread as a draft and displaying the further e-mail thread; and generating a further prompt for pasting the draft response as a reply to the further e-mail thread instead of the first e-mail thread.

## Description

### FIELD

The present disclosure relates to electronic mail (e-mail) systems, and more particularly to a method of managing electronic messages to prevent thread splitting.

### BACKGROUND

It is well known in the wireless communication arts to send and receive e-mail messages between electronic devices such as computers, smart phones, etc. An e-mail thread is a series of e-mail messages and replies on a particular topic (i.e. the topic identified in the subject line) between two or more parties. In this specification, the term 'e-mail' means 'electronic message', which in turn means any other kind of threadable message. E-mail communications on a particular subject may include numerous exchanges between parties and/or include a large distribution list, thereby resulting in e-mail threads incorporating numerous e-mail messages. Each e-mail thread includes the most recent reply as well as a copy of the e-mail to which it replies, and all previous e-mails in reverse-chronological order. However, a person of skill in the art will appreciate that the order of e-mails in a thread is user-configurable (i.e. e-mails may appear in chronological order (i.e., least recent to most recent).

It is possible for an e-mail recipient, upon receipt of an e-mail thread, to begin replying to the thread without being aware of new messages being added to the thread by another party on the thread while the e-mail recipient is composing the reply. This can lead to inadvertent sending of an e-mail message, the contents of which may already have been captured by the newly received messages. The response, when sent, is added to the thread at the point where the user started her composition. That is, if new messages are received after a particular message, where message M is the message to which the recipient has composed a reply, then the reply will be added to the thread after message M, instead of after the most recent message in the thread. This can lead to the inadvertent "splitting" of a single thread into multiple threads, making it difficult to keep all related messages together as one cohesive discussion. It is possible to add the reply to message M after the latest message in the thread provided the recipient is aware of the latest message and manually copies the reply and pastes it in a reply to the latest message. However, in order to do so the recipient must be aware of the new messages and, in any event, such copying and pasting is inefficient and prone to mistakes.

E-mail notification systems are known in the art, for providing notification of new e-mails in an e-mail inbox or account.

### SUMMARY

In one aspect there is provided a method of managing electronic messages to prevent thread splitting by notifying a user who is in the process of writing a response to a message in the thread, of a new message and offering a choice of reading the message, sending the response as a response to the new message, sending the response as a response to the earlier message, or abandoning it altogether.

In another aspect there is provided a method for managing electronic messages to prevent thread splitting, comprising receiving and displaying a first electronic message thread, generating a notification of receipt of any further receiving and displaying a first electronic message; generating a notification of receipt of any further electronic message in a thread containing said first electronic message prior to sending a response to the first electronic message, wherein said notification includes a first prompt to display said further electronic message and save said response to the first electronic message as a draft; and generating a further prompt for pasting the draft response as a reply to said further electronic message instead of said first electronic message.

In a further aspect there is provided a method implemented in an electronic device for managing electronic messages to prevent thread splitting, comprising receiving and displaying a first electronic message; and in the event of receipt of any further electronic message in a thread containing said first electronic message prior to sending a response to the first electronic message automatically pasting said response as a reply to said further electronic message instead of said first electronic message.

According to yet another aspect there is provided an electronic device, comprising a display, a messaging system for receiving a first electronic message, and a processor connected to said display and said messaging system for detecting receipt of any further electronic message in a thread containing said first electronic message prior to sending a response to the first electronic message and pasting said response as a reply to said further electronic message instead of said first electronic message.

### BRIEF DESCRIPTION OF THE DRAWINGS

The embodiments will be better understood with reference to the following Figures in which like numerals denote like parts and in which:
Figure 1 is a schematic diagram of a wireless communication system;
Figure 2 is a block diagram of components of a portable electronic device according to an embodiment;
Figure 3 is a flowchart showing steps in a method of managing e-mails to prevent thread splitting, according to an exemplary embodiment; and
Figures 4a - 4f illustrate graphical user interfaces of the portable electronic device of Figure 2 for implementing the method illustrated in the flowchart of Figure 3.

### DETAILED DESCRIPTION

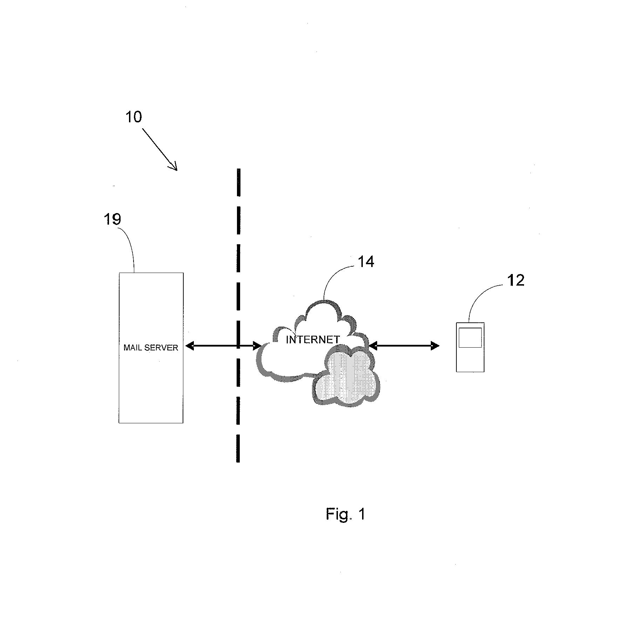

Referring to Figure 1, a communication system 10 for a mobile communication device 12 is generally shown. The mobile communication device 12 is operable to effect communications over a radio communications channel and communicates with a base station (not shown) while located within a coverage area that is defined by the base station.

The base station is part of a wireless network that is in communication with the Internet 14, or other network such as a WAN. Data is delivered to the mobile communication device 12 via wireless transmission from the base station. Similarly, data is sent from the mobile communication device 12 via wireless transmission to the base station.

It will be appreciated that the mobile communication device 12 is movable within the coverage area and can be moved to coverage areas defined by other base stations. Further, as will be understood by one of ordinary skill in the art, wireless networks include GSM/GPRS, CDPD, TDMA, iDEN, Mobitex, DataTAC networks, EDGE, EVDO or UMTS and broadband networks such as Bluetooth and variants of 802.11.

A mail server 19 handles the receipt and delivery of e-mail messages between device 12 and other e-mail equipped communication devices such as computers, smart phones, etc., in a well known manner.

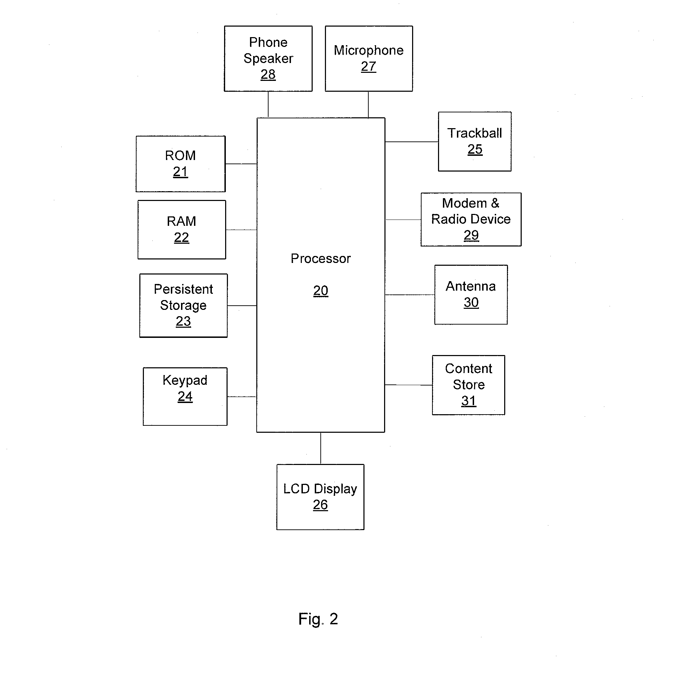

Referring now to Figure 2, a block diagram of certain components within the portable electronic device 12 is shown. In the present embodiment, the portable electronic device 12 is based on the computing environment and functionality of a wireless personal digital assistant (PDA). It will be understood, however, that the portable electronic device 12 is not limited to wireless personal digital assistants. Other portable electronic devices are possible, such as smart telephones, and laptop computers.

The portable electronic device 12 includes a processor 20 connected to a read-only-memory (ROM) 21 that contains a plurality of applications executable by the processor 20 that enables the portable electronic device 12 to perform certain functions including, for example, a messaging application, PIN message application, SMS message application and cellular telephone application. The processor 20 is also connected to a random access memory unit (RAM) 22 and a persistent storage device 23, which are responsible for various storage functions of the portable electronic device 12. The processor 20 receives input from input devices such as a keypad 24 and trackball 25. A person of skill in the art will appreciate that device 12 may include other or different input devices such as buttons, touch-sensitive screens, track wheels, etc. The processor 20 outputs to various output devices, such as an LCD display 26. A microphone 27 and phone speaker 28 are connected to the processor 20 for cellular telephone functions. The processor 20 is also connected to a messaging system including a modem and radio device 29. The modem and radio device 29 is used to connect to wireless networks and transmit and receive voice and data communications through an antenna 30. A content store 31, which is generally a file storage system for the portable electronic device 12, is also provided.

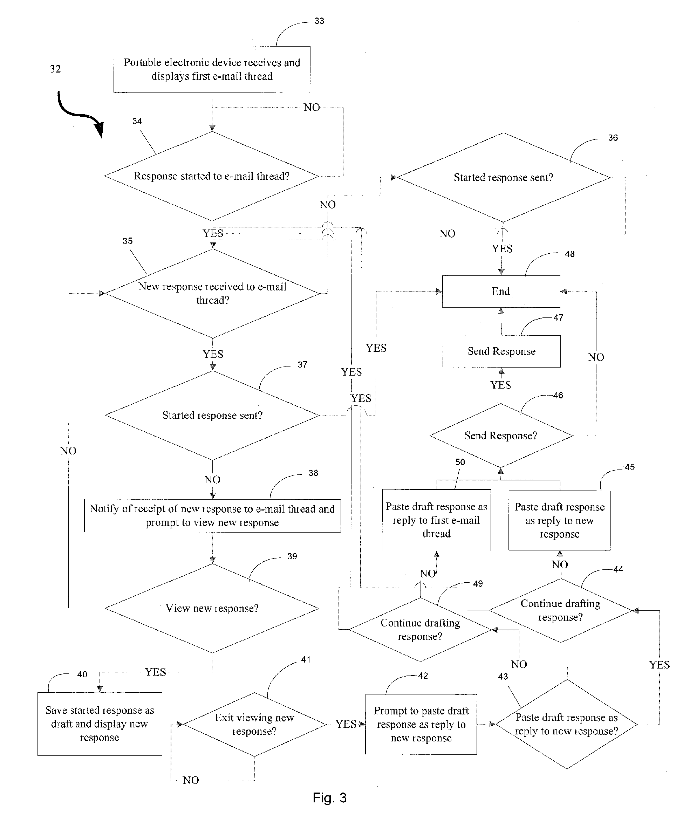

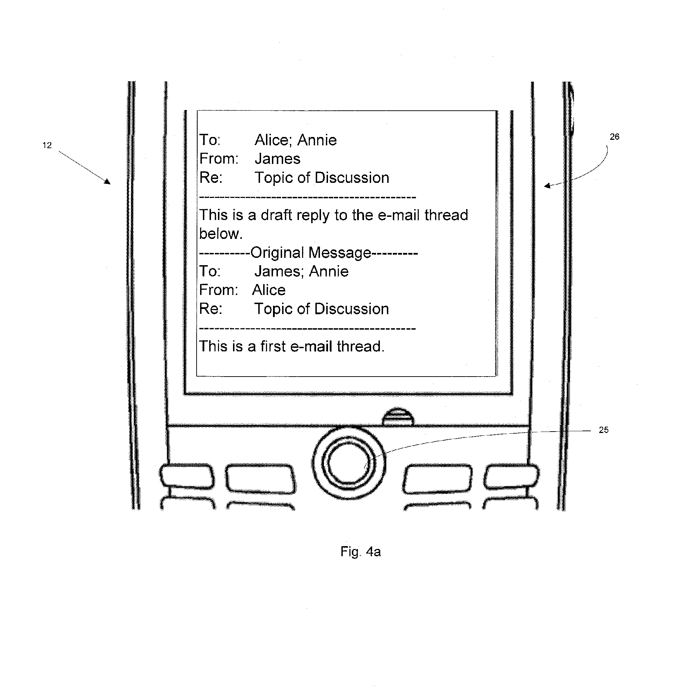

Figure 3 depicts method 32 implemented by the messaging application within device 12 for managing e-mails to prevent thread splitting. At 33, an e-mail thread is received and displayed at the device 12. The e-mail thread is referred to in Figure 3 as a 'first' e-mail thread although, in fact, the received e-mail thread may be a second, third or any e-mail in an e-mail thread. The term "first" is used to distinguish from subsequent e-mails in the thread. A determination is made at 34 as to whether the user has begun responding to the message received at 33, as shown in Figure 4a, for example by manipulating trackball 25 (or other input device) to select a 'Reply' menu option. If not, the determination at 34 is repeated. If it is determined that the user has begun a reply to the thread, a determination is made at 35 as to whether any subsequent or 'new' response to the first e-mail thread has been received prior to the user sending her response. The determination at step 35 may be made by processor 20 examining one of either a thread identifier contained within a header of the e-mail or analyzing the e-mail subject line or any meta-data contained within the e-mail from which the thread can be identified. Additionally, an identifier for each replied-to message can be included in the e-mail headers to facilitate tracking of any thread splitting (e.g. as a result of replying to an earlier message in a thread, so that 'side-threads' can be displayed via display 26).

If the determination at step 35 indicates that no new e-mail has arrived, then a determination is made at 36 as to whether the started response has been sent. If not, the determination at 35 is repeated. If the started response has been sent, then the method ends at 48.

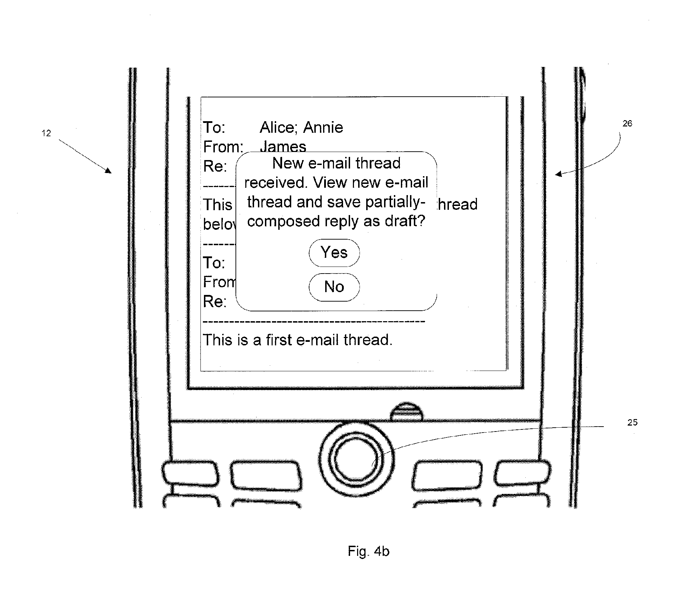

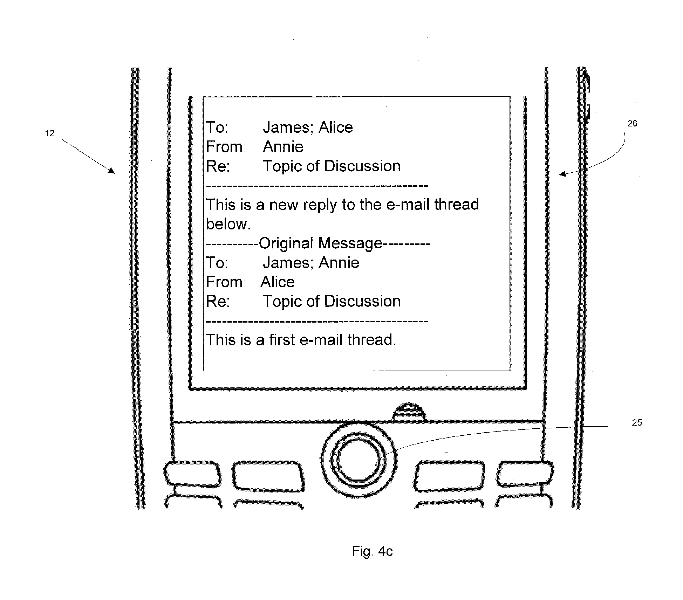

If the determination at 35 indicates that a new response has been received to the e-mail thread then a similar determination is made at 37 as to whether the started response has been sent. If the started response has been sent, then the method ends at 48. Otherwise, if the started response has not been sent, then a notification is generated at 38 indicative of the new response having been received and prompting the user to view the new response, as shown in Figure 4b. If a decision is made at 39 to view the response then the started response is saved in RAM 22 (or the persistent storage 23 or content store 31) as a draft and the newly received response is displayed at 40, as shown in Figure 4c. Otherwise, if the decision at 39 is not to view the new response then the determination at 35 is repeated.

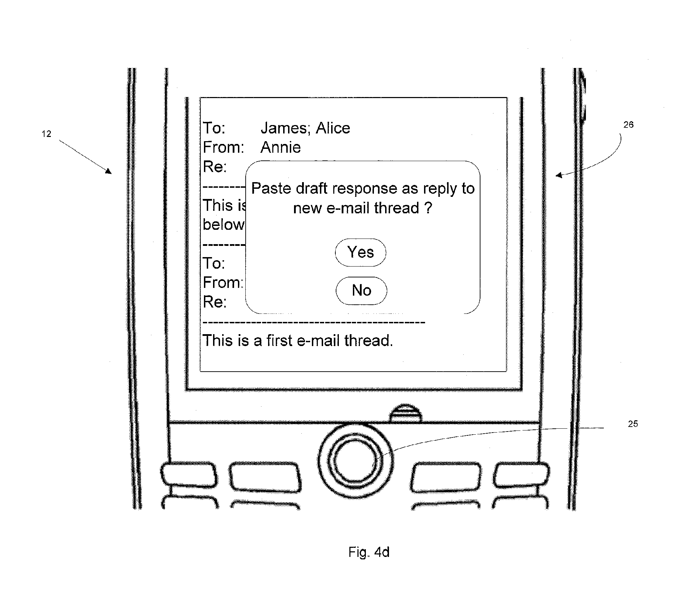

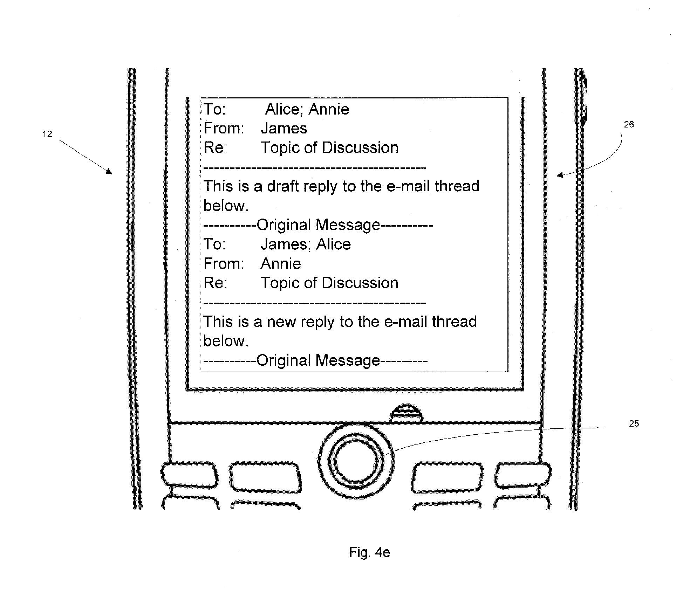

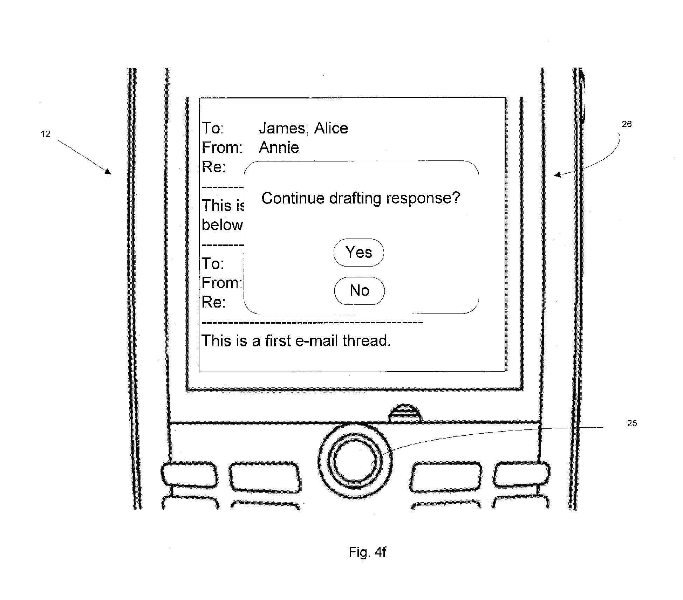

After saving the started response as a draft at 40 and exiting from viewing the received response at 41, a prompt is generated at 42 to paste the draft response to the newly received response, as shown in Figure 4d. Alternatively, the prompt can be explicitly triggered via a menu option selected using the trackball 25 or other input device. If a decision is made at 43 to paste the draft response to the newly received response, then a prompt is generated at 44 to continue drafting. If a decision is made not to continue drafting, then the draft response is pasted to the newly received response as a reply, at 45 and as shown in Figure 4e. Thereafter, a prompt is generated 46 to send the response. If a decision is made to send the response then the response is sent at 47 and the method ends at 48. If a decision is made at 44 to continue drafting, then the method implemented by processor 20 returns to 35.If a decision is made at 43 not to paste the draft response to the newly received response, then a further prompt is generated at 49, as shown in Figure 4f, to determine if the user wishes to continue drafting the response. If not, then the draft response is pasted to the first e-mail thread as a reply, at 50 and as shown in Figure 4a.

The exemplary method set forth above automatically notifies a user of the latest message in a thread and prompts the user to paste an at least partially composed message as a reply to the latest thread so as to prevent inadvertent "thread splitting". The menu prompts in Figure 4 facilitate simple insertion of the at least partially composed message into the thread at the most current message. In particular, the user is not required to perform a copy/find/paste operation to move a response to the top of the thread.

A specific embodiment has been shown and described herein. However, modifications and variations may occur to those skilled in the art. For example, although the method of Figure 3 is described in connection with the portable electronic device 12 of Figures 1 and 2, a person of skill in the art will understand that the method may be implemented by any communication device having e-mail capabilities including, but not limited to desktop and laptop computers, Personal Digital Assistants (PDAs), cellular telephones, etc. According to one embodiment, functionality may be added for allowing the user to configure the messaging application so that it always handles newly received messages in the same way when viewing or responding to a message. For example, an option may be invoked to automatically paste the response as a reply to the newest e-mail in a thread instead of the earlier e-mail, in which case the method skips from a 'YES' response at step 41 directly to step 45. These and other such modifications and variations are believed to be within the sphere and scope of the present embodiment.

## Claims

1. A method implemented in an electronic device (12) for managing electronic messages to prevent thread splitting, comprising:
receiving and displaying (33) a first electronic message;
generating a notification (38) of receipt of any further electronic message in a thread containing said first electronic message prior to sending a response to the first electronic message, wherein said notification includes a first prompt to display said further electronic message and save said response to the first electronic message as a draft; and
generating a further prompt (42) for pasting the draft response as a reply to said further electronic message instead of said first electronic message.

2. The method of claim 1, further comprising generating an additional prompt (49) to continue drafting said response.

3. The method of claim 1 or 2, wherein generating said notification (38) includes examining one of either a thread identifier contained within a header of said further electronic message or analyzing a subject line of said further electronic message or meta-data contained within said further electronic message to identify said thread.

4. The method of claim 2, wherein said draft response is pasted as a reply to one of either the first electronic message or said further electronic message on the basis of said further prompt in the event said additional prompt is declined.

5. The method of claim 4, further comprising generating a prompt (46) to send the reply.

6. The method of any of claims 1 to 5, wherein said further prompt (42) is generated following display of said further electronic message.

7. A method implemented in an electronic device (12) for managing electronic messages to prevent thread splitting, comprising:
receiving and displaying (33) a first electronic message; and
in the event of receipt of any further electronic message in a thread containing said first electronic message prior to sending a response to the first electronic message automatically pasting said response as a reply to said further electronic message (45) instead of said first electronic message.

8. An electronic device (12), comprising:
a display (26);
a memory (21) having an executable messaging application for managing electronic message;
a processor (20) connected to said display and said memory for receiving a receiving and displaying a first electronic message via said display and detecting receipt of any further electronic message in a thread containing said first electronic message prior to sending a response to the first electronic message and pasting said response as a reply to said further electronic message instead of said first electronic message.

9. The electronic device of claim 8, wherein said processor (20) generates (i) a notification (38) of receipt of said further electronic message on said display (26) prior to sending said response to the first electronic message, wherein said notification includes a first prompt to display said further electronic message and save said response to the first electronic message as a draft, and (ii) a further prompt (42) on said display (26) for pasting said draft response as said reply to said further electronic message instead of said first electronic message.

10. The electronic device of claim 9, wherein said processor (20) generates an additional prompt (49) at said display (26) to continue drafting said response.

11. The electronic device of claim 9, wherein said processor (20) examines one of either a thread identifier contained within a header of said further electronic message or analyzes a subject line of said further electronic message or meta-data contained within said further electronic message to identify said thread.

12. The electronic device of claim 10, wherein said processor (20) causes said draft response to be pasted as a reply to one of either the first electronic message or said further electronic message on the basis of said further prompt in the event said additional prompt is declined.

13. The electronic device of claim 12, wherein said processor (20) generates a prompt at said display (26) to send the reply.

14. The electronic device of any of claims 9 to 13, wherein the processor (20) generates said further prompt following display of said further electronic message.

## Amended claims

### Amended claims in accordance with Rule 137(2) EPC.

**1.** A method implemented in an electronic device (12) for managing electronic messages to prevent thread splitting, comprising:
receiving and displaying (33) a first electronic message;
generating a notification (38) of receipt of any further electronic message in a thread containing said first electronic message prior to sending a response to the first electronic message, wherein said notification includes a first prompt to display said further electronic message and save said response to the first electronic message in memory (21) of said electronic device as a draft; and
generating a further prompt (42) for pasting the draft response from said memory as a reply to said further electronic message instead of said first electronic message.

**2.** The method of claim 1, further comprising generating an additional prompt (49) to continue drafting said response.

**3.** The method of claim 1, wherein generating said notification (38) includes examining one of either a thread identifier contained within a header of said further electronic message or analyzing a subject line of said further electronic message or meta-data contained within said further electronic message to identify said thread.

**4.** The method of claim 2, wherein said draft response is pasted as a reply to one of either the first electronic message or said further electronic message on the basis of said further prompt in the event said additional prompt is declined.

**5.** The method of claim 4, further comprising generating a prompt (46) to send the reply.

**6.** The method of claim 1, wherein said further prompt (42) is generated following display of said further electronic message.

**7.** A method implemented in an electronic device (12) for managing electronic messages to prevent thread splitting, comprising:
receiving and displaying (33) a first electronic message; and
in the event of receipt of any further electronic message in a thread containing said first electronic message prior to sending a response to the first electronic message saving save said response to the first electronic message in memory (22, 23 or 31) of said electronic device and automatically pasting said response from said memory as a reply to said further electronic message (45) instead of said first electronic message.

**8.** An electronic device (12), comprising:
a display (26);
a memory (21) having an executable messaging application for managing electronic message;
a processor (20) connected to said display and said memory for receiving a receiving and displaying a first electronic message via said display and
detecting receipt of any further electronic message in a thread containing said first electronic message prior to sending a response to the first electronic message, saving save said response to the first electronic message in memory (21) of said electronic device and pasting said response from said memory as a reply to said further electronic message instead of said first electronic message.

**9.** The electronic device of claim 8, wherein said processor (20) generates (i) a notification (38) of receipt of said further electronic message on said display (26) prior to sending said response to the first electronic message, wherein said notification includes a first prompt to display said further electronic message and save said response to the first electronic message as a draft, and (ii) a further prompt (42) on said display (26) for pasting said draft response as said reply to said further electronic message instead of said first electronic message.

**10.** The electronic device of claim 9, wherein said processor (20) generates an additional prompt (49) at said display (26) to continue drafting said response.

**11.** The electronic device of claim 9, wherein said processor (20) examines one of either a thread identifier contained within a header of said further electronic message or analyzes a subject line of said further electronic message or meta-data contained within said further electronic message to identify said thread.

**12.** The electronic device of claim 10, wherein said processor (20) causes said draft response to be pasted as a reply to one of either the first electronic message or said further electronic message on the basis of said further prompt in the event said additional prompt is declined.

**13.** The electronic device of claim 12, wherein said processor (20) generates a prompt at said display (26) to send the reply.

**14.** The electronic device of claim 9, wherein the processor (20) generates said further prompt following display of said further electronic message.
